(19) Europäisches Patentamt
European Patent Office
Office européen des brevets

(11) Veröffentlichungsnummer: **0 112 871**
**B1**

(12) # EUROPÄISCHE PATENTSCHRIFT

(45) Veröffentlichungstag der Patentschrift: **09.12.87**

(51) Int. Cl.⁴: **C 07 F 9/22**, C 07 F 9/24, A 61 K 31/66

(21) Anmeldenummer: **83902085.6**

(22) Anmeldetag: **06.07.83**

(86) Internationale Anmeldenummer: **PCT/DE 83/00122**

(87) Internationale Veröffentlichungsnummer: **WO 84/00368 (02.02.84** Gazette **84/3)**

(54) **DERIVATE DES N.N-BIS(2-CHLOR-ÄTHYL)-PHOSPHORSÄUREAMIDS.**

**Verbunden mit 83106625.3/0098601 (europäische Anmeldenummer/Veröffentlichungsnummer) durch Entscheidung vom 26.11.84.**

(30) Priorität: **06.07.82 DE 3225227**

(43) Veröffentlichungstag der Anmeldung: **11.07.84 Patentblatt 84/28**

(45) Bekanntmachung des Hinweises auf die Patenterteilung: **09.12.87 Patentblatt 87/50**

(84) Benannte Vertragsstaaten: **AT BE CH DE FR GB IT LI LU NL SE**

(56) Entgegenhaltungen:
**EP - A - 0 072 531**
**CH - A - 372 051**
**GB - A - 2 020 663**

**Angewandte Chemie, vol. 70, no. 17/18, 23 September 1958 (DE), H. Arnold and F. Bouseaux: "Synthese und Abbau cytostatisch wirksamer cyclischer N-Phosphamidester des Bis(beta-chloräthyl)-amins", pages 539-544**

(73) Patentinhaber: **Max-Planck-Gesellschaft zur Förderung der Wissenschaften e.V., Bunsenstrasse 10, D-3400 Göttingen (DE)**

(72) Erfinder: **EIBL, Hansjörg, Steinweg 51, D-3406 Bovenden (DE)**

(74) Vertreter: **Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820, D-8000 München 86 (DE)**

(56) Entgegenhaltungen: (Fortsetzung)
**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft neue Derivate des N,N-Bis-(2-chlor-äthyl)-phosphorsäureamids, die insbesondere eine ausgeprägte Antitumor-Wirkung besitzen.

Das Cyclophosphamid ist ein bewährtes Cytostatikum, welches unter verschiedenen Bezeichnungen im Handel erhältlich ist. Die cancerotoxische Selektivität der N-2-Chlor-äthylamido-oxaza-phosphorine, wie Cyclophosphamid (H. Arnold und F. Bourseaux, Angew. Chemie 70 (1958), 539) ist eng an die spezielle Ringstruktur des Oxaza-phosphorin-Ringes mit einer Propanolaminphosphorsäureester-Gruppierung gebunden. Es liegt hier das Prinzip einer Transport-Wirkform vor. Die Transportform der Cyclophosphamide ist inaktiv, ihre Aktivierung muss in der Leber erfolgen. Als Wirkform der Cyclophosphamide wird das Phosphorsäurediamid der Formel

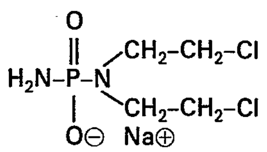

angenommen.

Aufgabe der vorliegenden Erfindung war es nun, die Aktivierung in der Leber zu umgehen und allgemeine Aktivierungsprinzipien auszunutzen, wie beispielsweise geringe pH-Differenzen zwischen Normal- und Tumorzellen. Diese Aufgabe wird mit der vorliegenden Erfindung gelöst.

Gegenstand der Erfindung sind Derivate des N,N-Bis-(2-chlor-äthyl)-phosphorsäureamids der allgemeinen Formel I

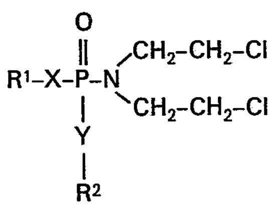

(I)

worin X und Y gleich oder verschieden sind und O oder $NR^3$ bedeuten, $R^1$ und $R^2$ gleich oder verschieden sind und $R^1$ den Rest $CH_2(OR^4)-CH_2-CH_2-$, $CH_2(OR^4)-CH(CH_3)-CH_2-$ und insbesondere den Rest $CH_2(OR^4)-CH(OR^5)-CH_2-$ bedeutet, und, wenn X eine $NR^3$-Gruppe ist, auch Wasserstoff sein kann, $R^2$ eine der Bedeutungen von $R^1$ besitzt und Äthyl, Propyl, Allyl, Propenyl, Chloräthyl, Benzyl oder Methyl ist, $R^3$ Wasserstoff, Methyl, Äthyl, Propyl oder Allyl ist mit der Massgabe, dass falls sowohl X als auch Y gleich $NR^3$ ist, $R^1$, $R^2$ und $R^3$ nicht alle gleichzeitig Wasserstoff sein können, und worin die Reste $R^4$ und $R^5$ gleich oder verschieden sind und einen Alkylrest R oder einen Acylrest -COR darstellen, wobei R eine geradkettige oder verzweigte gesättigte oder ungesättigte Alkylgruppe mit 1 bis 25 Kohlenstoffatomen bedeutet, oder einen Alkylrest mit 1 bis 25 Kohlenstoffatomen in der Alkylkette bedeutet, und einer der Reste auch ein Wasserstoffatom sein kann.

Ein Alkylrest R kann verzweigt oder vorzugsweise unverzweigt sein. Als Alkylrest kann R auch substituiert sein und besitzt in einem der Reste $R^4$ oder $R^5$ vorzugsweise 1 bis 7, insbesondere 1 bis 3 Kohlenstoffatome, und im anderen Rest $R^4$ oder $R^5$ 16 bis 20 Kohlenstoffatome. Ein substituierter Alkylrest R ist vorzugsweise nur in einem der Reste $R^4$ oder $R^5$ enthalten. Substituenten im Alkylrest R sind zum Beispiel Hydroxy, Halogen, Mesyloxy, Alkoxy, Alkenyloxy oder Alkinyloxy mit 3 bis 12 Kohlenstoffatomen oder Dihydroxypropyloxy.

Eine Acylgruppe -COR leitet sich insbesondere von einer natürlichen Fettsäure, wie zum Beispiel Behen-, Laurin-, Stearin-, Palmitin-, Myristin-, Caprin- oder Arachinsäure ab.

In einer Aralkylgruppe R ist der Arylrest vorzugsweise ein gegebenenfalls durch Alkyl mit 1 bis 7, insbesondere 1 oder 2 Kohlenstoffatomen substituierter Phenylrest und die Alkylgruppe besitzt vorzugsweise 1 bis 4 Kohlenstoffatome. Sie ist zum Beispiel Phenäthyl und insbesondere Benzyl.

Die untereinander verschiedenen Reste $R^4$ und $R^5$ können sich auch nur in ihrer sterischen Konfiguration oder nur durch den Gehalt unterschiedlicher Isotopen, wie zum Beispiel Deuterium, Tritium, $C_{14}$ unterscheiden; vorzugsweise leiten sich die Glyceridreste, insbesondere der Rest $-CH_2(OR^4)-CH(OR^5)-CH_2-$, von den reinen stereoisomeren D- oder L-Formen ab, insbesondere von den biologisch aktiven stereoisomeren Formen.

Ein Glyceridrest $R^1$ oder $R^2$ leitet sich zum Beispiel ab von den Glycerinderivaten der Formel I der deutschen Patentanmeldung P 3 130 867, und insbesondere von den Äther-lecithinen der Formel I der DE-OS 2 619 686, von den Glycerinderivaten der Formeln II, III oder IV der deutschen Patentanmeldung der gleichen Anmelderin «Neue D-Mannitderivate als Ausgangsprodukte zur Synthese von Phospholipiden» vom gleichen Anmeldetag, wobei die Reste $R^1$ und $R^2$ in diesen Anmeldungen den Resten $R^4$ und $R^5$ im Glyceridrest entsprechen.

Besonders bevorzugt ist die Verbindung der Formel I, in der $R^1$ 3-Octadecyloxy-2-methoxypropyl bedeutet, $R^2$ Methyl, X die NH-Gruppe und Y Sauerstoff.

Es wurde gefunden, dass die erfindungsgemässen Verbindungen der allgemeinen Formel I eine sehr gute Antitumor-Wirksamkeit besitzen, die mit der von Cyclophosphamiden vergleichbar ist und diese, insbesondere aufgrund der geringeren Toxizität, zum Teil übertrifft. Aufgrund ihrer Struktur besitzen die erfindungsgemässen Verbindungen insbesondere eine hohe Selektivität gegenüber Tumorzellen, mit einer deutlich verringerten schädigenden Wirkung auf gesunde Zellen.

In den erfindungsgemässen Verbindungen der Formel I liegt die Wirkform in einer neutralen, durch Kopplung an ein Lipidmolekül membranähnlichen Transportform vor. Aufgrund ihrer hydrophoben Gruppen werden sie leicht in die Zellmembran eingebaut. Im schwach sauren Bereich, wie er in Tumorzellen vorliegt, tritt dann eine Spaltung unter Freisetzung der cytostatisch wirksamen polaren Wirkform ein. Dadurch werden die Zellmembranen von Tumorzellen bevorzugt angegriffen, während die Membranen normaler Zellen relativ unversehrt bleiben.

Aufgrund ihrer Struktur ist es möglich, die Lipophilie oder Hydrophilie der erfindungsgemässen Verbindungen der Formel I zu steuern und den besonderen Problemen anzupassen. Durch eine einfache Variation der Struktur (insbesondere in der Bedeutung der Reste $R^1$ und/oder $R^2$) kann ausserdem auch der Übergang von der Transportform in die Wirkform nach Wunsch beschleunigt oder verlangsamt werden.

Gegenstand der Erfindung ist auch ein Verfahren zur Herstellung der Verbindungen der allgemeinen Formel I, das dadurch gekennzeichnet ist, dass man

1) N,N-Bis-(2-chlor-äthyl)-amidophosphorsäuredichlorid

a) mit einer Verbindung $R^1$–XH umsetzt und das erhaltene Reaktionsprodukt dann mit einer Verbindung der Formel $R^2$–YH, oder

b) mit einer Verbindung der Formel $R^2$–YH umsetzt und das erhaltene Reaktionsprodukt dann mit einer Verbindung der Formel $R^1$–XH, wobei $R^1$, $R^2$, X und Y die oben angegebene Bedeutung besitzen, oder

2) Phosphoroxychlorid mit $R^1$–XH umsetzt, das erhaltene $R^1X–POCl_2$ mit Bis-(2-chlor-äthyl)-amin umsetzt, und die erhaltene Verbindung dann mit $R^2$–YH umsetzt, wobei $R^1$, $R^2$, X und Y die oben angegebene Bedeutung besitzen.

Die einzelnen Reaktionsstufen der Verfahrensvariante 1) und 2) können unter den für solche Umsetzungen bekannten Bedingungen erfolgen. Die Umsetzung von $R^1X–POCl_2$ mit Bis-(2-chlor-äthyl)-amin erfolgt in Gegenwart einer Base, wie vorzugsweise von Triäthylamin, in einem inerten organischen Lösungsmittel, wie zum Beispiel in Dioxan, Chloroform, Tetrachlorkohlenstoff, Methylenchlorid oder vorzugsweise in Tetrahydrofuran. Beispielsweise wird die Verbindung $R^1$–XH (0,1 mol) in 100 ml Tetrahydrofuran gelöst und bei 0°C zu $POCl_3$ (0,15 mol), das Triäthylamin (0,12 mol) enthält, zugetropft. Man erwärmt langsam auf 20°C, filtriert vom ausgefallenen Triäthylaminhydrochlorid ab und versetzt bei 20°C tropfenweise mit Bis-(2-chlor-äthyl)-amin (0,1 mol) in 100 ml Tetrahydrofuran, das Triäthylamin (0,15 bis 0,2 mol) enthält. Das erhaltene Reaktionsprodukt wird dann mit $R^2$–YH umgesetzt, zum Beispiel mit a) (für Y = 0) Methanol, Äthanol oder Allylalkohol, oder b) (für Y = $NR^3$) mit Ammoniak, Methylamin oder Dimethylamin.

Die Ausgangsverbindungen für die erfindungsgemässen Verfahren sind bekannt oder können nach an sich bekannten Methoden hergestellt werden. Bevorzugte Synthesemöglichkeiten für die Verbindungen $R^1$–XH oder $R^2$–YH, in denen $R^1$ und $R^2$ einen Glyceridrest bedeutet, werden zum Beispiel in der deutschen Patentanmeldung P 3 130 867 der gleichen Anmelderin vom 4. August 1981 oder in der deutschen Patentanmeldung der gleichen Anmelderin und mit dem gleichen Anmeldedatum «Neue D-Mannitderivate als Ausgangsprodukte zur Synthese von Phospholipiden» beschrieben, oder in der DE-OS 2 619 686 angegeben.

Gegenstand der Erfindung sind auch Arzneimittel, die eine oder mehrere der Verbindungen der Formel I als Wirkstoff enthalten. Neben den üblichen pharmazeutischen Konfektionierungs- und/oder Verdünnungsmitteln können diese Arzneimittel neben den Verbindungen der Formel I zur Unterstützung der Therapie gegebenenfalls auch noch weitere Wirkstoffe enthalten, sofern diese mit den erfindungsgemässen Verbindungen der Formel I zusammen keine unerwünschten Nebenwirkungen zeigen.

Die Wirksamkeit von Verbindungen der allgemeinen Formel I auf das Wachstum von Tumoren wird zweckmässig an Tumoren in Versuchstieren bewiesen. Hierfür kommen verschiedene experimentelle Tumore zur Verwendung, beispielsweise der Ehrlich-Ascites-Tumor, ein Methylcholanthren-induzierter Tumor und ein Myelom-Tumor in Mäusen, ferner ein chemisch induzierter Rattentumor. Die Antitumor-Substanzen werden parenteral in die tumortragenden Versuchstiere verabreicht. Bevorzugt wird die intravenöse und die intra- bzw. subkutane Applikation. Auch die orale Applizierbarkeit ist bei entsprechend höherer Dosierung des Antitumor-Mittels bei einer physiologisch verträglichen Zubereitung, zum Beispiel in Kapseln, nicht ausgeschlossen.

Als Dosierung hat sich bei der parenteralen Applikation zweckmässig erwiesen, etwa 0,05 bis 5 mg/kg Körpergewicht einzusetzen. Um die Antitumor-Mittel über längere Zeit im Kreislauf persistieren zu lassen, ist es häufig sinnvoll, die Mittel täglich oder in zwei- bis dreitägigen Abständen zu applizieren.

Die nachfolgenden Beispiele erläutern die Erfindung weiter, ohne sie darauf zu beschränken.

Beispiele

Darstellung von Aminen, die den Rest $R_1$ enthalten

Nachfolgend wird die Darstellung neuer Amine beschrieben, die einen Glyceringrundkörper oder einen Alkandiol-(ω,ω')-Grundkörper besitzen ($R^1$ = $CH_2(OR^4)–CH_2–CH_2–$, $CH_2(OR^4)–CH(CH_3)–CH_2–$ oder $CH_2(OR^4)–CH(OR^5)–CH_2–$). Ausgangsprodukte sind die entsprechenden Diäther oder Monoäther, beispielsweise 1-Octadecyl-2-methyl-sn-glycerin. Die Alkoholgruppe der Diäther wird zunächst mesyliert und dann mit überschüssigem Ammoniak umgesetzt.

Mesylierung

Der Alkohol (0,1 mol) wird in 300 ml THF gelöst und mit Triäthylamin (0,2 mol) versetzt. Bei 10°C wird Mesylchlorid (0,1 mol) unter Rühren eingetropft, bis das Ausgangsprodukt nicht mehr nachzuweisen ist. Nach Zusatz von 300 ml Diisopropyläther wird mit 300 ml Wasser gewaschen, die Ätherphase über $Na_2SO_4$ getrocknet und das Lösungsmittel im Vakuum entfernt. Das zurückbleibende Öl wird direkt weiter umgesetzt.

Aminierung

Der ölige Rückstand aus der Mesylierung (0,1 mol) wird in 100 ml Chloroform, 300 ml DMF, 200 ml Methanol und 200 ml 25% Ammoniak (in Wasser; 3 mol) auf 50°C erhitzt, bis das Ausgangsprodukt vollständig umgesetzt ist. Man extrahiert mit Chloroform, entfernt das Lösungsmittel und reinigt kleinere Mengen durch Chromatographie, die Hauptmenge wird direkt für die weiteren Umsetzungen verwendet. Die Ausbeuten liegen bei 90%, bezogen auf den Ausgangsalkohol.

Auf diese Weise wurden die folgenden Verbindungen hergestellt:

1-Octadecyl-2-Methyl-3-Desoxy-3-Amino-sn-Glycerin

($C_{22}H_{47}N\ O_2$; 357,626)

ber.: C 73,89 H 13,25
gef.: C 74,01 H 13,34

1-Octadecyl-2-Pentyl-3-Desoxy-3-Amino-sn-Glycerin

($C_{26}K_{55}N\ O_2$; 413,73)

ber.: C 75,48 H 13,40
gef.: C 75,61 H 13,63

1-Octadecyl-2-Dodecyl-3-Desoxy-3-Amino-sn-Glycerin

($C_{33}H_{69}N\ O_2$; 511,92)

ber.: C 77,43 H 13,59
gef.: C 77,71 H 13,67

1) Darstellung der Phosphorsäurediamid-Monochloride

A) N,N-Bis-(2-chlor-äthyl)-amido-phosphorsäuredichlorid:

Phosphoroxychlorid (0,15 mol) in 100 ml THF werden bei 10°C tropfenweise mit Bischloräthylamin (0,1 mol) in 100 ml THF und Triäthylamin (0,15 mol) versetzt. Nach Beendigung der Reaktion (DC-Kontrolle) wird Triäthylaminhydrochlorid abfiltriert und das Filtrat nach Zusatz von 50 ml Toluol einrotiert. Der ölige Rückstand wird sofort weiter umgesetzt.

B) N,N-Bis-(2-chlor-äthyl)-amido-N′-alkyl-amido-phosphorsäure-Monochlorid

Der ölige Rückstand (0,1 mol) aus A) wird in 100 ml THF aufgenommen und bei 10°C tropfenweise mit Alkyl-amin (0,1 mol) in 100 ml THF und Triäthylamin (0,2 mol) versetzt. Nach Beendigung der Reaktion (DC-Kontrolle) wird vom Triäthylaminhydrochlorid abfiltriert und das Filtrat direkt weiter umgesetzt (siehe 2, A und B).

2) Alkoholyse oder Amidolyse der Phosphorsäurediamid-Monochloride

A) Alkoholyse: N,N-Bis-(2-chlor-äthyl)-amido-N′-alkyl-amido-phosphorsäurealkylester (Transportform)

Die Lösung in THF (B; 0,1 mol) wird mit einem primären Alkohol (1 mol) umgesetzt. Nach Beendigung der Reaktion (DC-Kontrolle) wird mit 200 ml Chloroform versetzt und zweimal mit 200 ml Wasser gewaschen. Das Lösungsmittel wird abgezogen und der Rückstand an Kieselgel chromatographiert. Die Ausbeuten liegen bei 90%.

Auf diese Weise wurden die folgenden Verbindungen hergestellt:

N,N-Bis-(2-chlor-äthyl)-amido-N′-octadecyl-amido-phosphorsäuremethylester

($C_{23}H_{49}Cl_2N_2O_2P$; 487,55)

ber.: C 56,55 H 10,13 N 5,75 P 6,35
gef.: C 56,91 H 10,24 N 5,86 P 6,31

N,N-Bis-(2-chlor-äthyl)-amido-N′-(1-octadecyl-2-methyl-3-desoxy-sn-glycerin)-3-amido-phosphorsäuremethylester

($C_{27}H_{57}Cl_2N_2O_4P$; 575,66)

ber.: C 56,34 H 9,98 N 4,87 P 5,38
gef.: C 56,01 H 10,07 N 4,98 P 5,53

N,N-Bis-(2-chlor-äthyl)-amido-N′-(1-octadecyl-2-dodecyl-3-desoxy-sn-glycerin)-3-amido-phosphorsäuremethylester
($C_{38}H_{79}Cl_2N_2O_4$; 729,96)

ber.: C 62,53 H 10,91 N 3,84 P 4,24
gef.: C 62,68 H 11,06 N 4,03 P 4,32

B) Amidolyse: N,N-Bis-(2-chlor-äthyl)-N′-alkyl-N″-alkylphosphotriamid (Transportform)

Die Lösung in THF (B; 0,1 mol) wird mit überschüssigem Amin (1 mol) versetzt. Nach Beendigung der Reaktion (DC-Kontrolle) wird mit 200 ml Chloroform versetzt und zweimal mit 200 ml Wasser gewaschen. Das Lösungsmittel wird abgezogen und der Rückstand an Kieselgel chromatographiert. Die Ausbeuten liegen bei 90%.

Auf diese Weise wurden folgende Verbindungen hergestellt:

N,N-Bis-(2-chlor-äthyl)-N′-(1-octadecyl-2-methyl-3-desoxy-sn-glycerin)-phosphorsäuretriamid

($C_{26}H_{56}Cl_2N_3O_3P$; 560,65)

ber.: C 55,70 H 10,07 N 7,50 P 5,53
gef.: C 55,81 H 10,14 N 7,39 P 5,24

N,N-Bis-(2-chlor-äthyl)-N′-(1-octadecyl-2-methyl-3-desoxy-sn-glycerin)-N″-methyl-phosphorsäuretriamid

($C_{27}H_{58}Cl_2N_3O_3P$; 574,674)

ber.: C 56,43 H 10,17 N 7,31 P 5,29
gef.: C 56,65 H 10,26 N 7,24 P 5,20

N,N-Bis-(2-chlor-äthyl)-N'-(1-octadecyl-2-methyl-3-desoxy-sn-glycerin)-N''-dimethyl-phosphorsäuretriamid

($C_{28}H_{60}Cl_2N_3O_3P$; 588,70)

ber.: C 57,13 H 10,27 N 7,14 P 5,26
gef.: C 57,24 H 10,35 N 6,91 P 5,01

**Patentansprüche**

für die Vertragsstaaten BE, CH, DE, FR, GB, LI, LU, NL, SE

1. Derivate des N,N-Bis-(2-chlor-äthyl)-phosphorsäureamids der allgemeinen Formel I

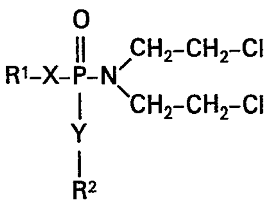
(I)

worin X und Y gleich oder verschieden sind und O oder $NR^3$ bedeuten, $R^1$ und $R^2$ gleich oder verschieden sind und $R^1$ den Rest $CH_2(OR^4)-CH_2-CH_2-$, $CH_2(OR^4)-CH(CH_3)-CH_2-$ oder $CH_2(OR^4)-CH(OR^5)-CH_2-$ bedeutet und, wenn X eine $NR^3$-Gruppe ist, auch Wasserstoff sein kann, $R^2$ eine der Bedeutungen von $R^1$ besitzt oder Äthyl, Propyl, Allyl, Propenyl, Chloräthyl, Benzyl oder Methyl ist, $R^3$ Wasserstoff, Methyl, Äthyl, Propyl oder Allyl ist mit der Massgabe, dass falls sowohl X als auch Y gleich $NR^3$ ist, $R^1$, $R^2$ und $R^3$ nicht alle gleichzeitig Wasserstoff sein können, und worin die Reste $R^4$ und $R^5$ gleich oder verschieden sind und einen Alkylrest R oder einen Acylrest -COR darstellen, wobei R eine geradkettige oder verzweigte gesättigte oder ungesättigte Alkylgruppe mit 1 bis 25 Kohlenstoffatomen bedeutet, oder einen Aralkylrest mit 1 bis 25 Kohlenstoffatomen in der Alkylkette bedeutet, und einer der Reste auch ein Wasserstoffatom sein kann.

2. Verbindungen nach Anspruch 1, dadurch gekennzeichnet, dass $R^1$ und/oder $R^2$ den Rest $CH_2(OR^4)-CH(OR^5)-CH_2-$ bedeuten, worin $R^4$ und $R^5$ die in Anspruch 1 angegebene Bedeutung besitzen.

3. Verbindungen nach Anspruch 1 oder 2, dadurch gekennzeichnet, dass $R^2$ Benzyl oder insbesondere Methyl ist.

4. Verbindung nach Anspruch 1, dadurch gekennzeichnet, dass $R^1$ 3-Octadecyloxy-2-methoxy-propyl, $R^2$ Methyl, X die NH-Gruppe und Y Sauerstoff bedeutet.

5. Verfahren zur Herstellung der Verbindungen der Formel I nach einem der Ansprüche 1 bis 4, dadurch gekennzeichnet, dass man

1) N,N-Bis-(2-chlor-äthyl)-amidophosphorsäuredichlorid

a) mit einer Verbindung $R^1$-XH umsetzt und das erhaltene Reaktionsprodukt danach mit einer Verbindung der Formel $R^2$-YH, oder

b) mit einer Verbindung der Formel $R^2$-YH umsetzt und das erhaltene Reaktionsprodukt mit einer Verbindung der Formel $R^1$-XH umsetzt, wobei $R^1$, $R^2$, X und Y die in den Ansprüchen 1 bis 4 angegebene Bedeutung besitzen, oder

2) Phosphoroxychlorid mit $R^1$-XH umsetzt, das erhaltene $R^1X-POCl_2$ mit Bis-(2-chlor-äthyl)-amin umsetzt und die erhaltene Verbindung dann mit $R^2$-YH, wobei $R^1$, $R^2$, X und Y die in den Ansprüchen 1 bis 4 angegebene Bedeutung besitzen.

6. Arzneimittel, enthaltend eine oder mehrere Verbindungen der Formel I nach einem der Ansprüche 1 bis 4.

**Patentansprüche**

für den Vertragsstaat AT

1. Verfahren zur Herstellung von Derivaten des N,N-Bis-(2-chlor-äthyl)-phosphorsäureamids der allgemeinen Formel I

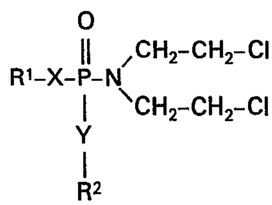
(I)

worin X und Y gleich oder verschieden sind und O oder $NR^3$ bedeuten, $R^1$ und $R^2$ gleich oder verschieden sind und $R^1$ den Rest $CH_2(OR^4)-CH_2-CH_2-$, $CH_2(OR^4)-CH(CH_3)-CH_2-$ oder $CH_2(OR^4)-CH(OR^5)-CH_2-$ bedeutet und, wenn X eine $NR^3$-Gruppe ist, auch Wasserstoff sein kann, $R^2$ eine der Bedeutungen von $R^1$ besitzt oder Äthyl, Propyl, Allyl, Propenyl, Chloräthyl, Benzyl oder Methyl ist, $R^3$ Wasserstoff, Methyl, Äthyl, Propyl oder Allyl ist mit der Massgabe, dass falls sowohl X als auch Y gleich $NR^3$ ist, $R^1$, $R^2$ und $R^3$ nicht alle gleichzeitig Wasserstoff sein können, und worin die Reste $R^4$ und $R^5$ gleich oder verschieden sind und einen Alkylrest R oder einen Acylrest -COR darstellen, wobei R eine geradkettige oder verzweigte gesättigte oder ungesättigte Alkylgruppe mit 1 bis 25 Kohlenstoffatomen bedeutet, oder einen Aralkylrest mit 1 bis 25 Kohlenstoffatomen in der Alkylkette bedeutet, und einer der Reste auch ein Wasserstoffatom sein kann, indem man

1) N,N-Bis-(2-chlor-äthyl)-amidophosphorsäuredichlorid

a) mit einer Verbindung $R^1$-XH umsetzt und das erhaltene Reaktionsprodukt danach mit einer Verbindung der Formel $R^2$-YH, oder

b) mit einer Verbindung der Formel $R^2$-YH umsetzt und das erhaltene Reaktionsprodukt mit einer Verbindung der Formel $R^1$-XH umsetzt, wobei $R^1$, $R^2$, X und Y die oben angegebene Bedeutung haben, oder

2) Phosphoroxychlorid mit $R^1$-XH umsetzt, das erhaltene $R^1X$-$POCl_2$ mit Bis-(2-chlor-äthyl)-amin umsetzt und die erhaltene Verbindung dann mit $R^2$-YH, wobei $R^1$, $R^2$, X und Y die oben angegebene Bedeutung haben.

2. Verfahren nach Anspruch 1, dadurch gekennzeichnet, dass $R^1$ und/oder $R^2$ den Rest $CH_2(OR^4)$-$CH(OR^5)$-$CH_2$- bedeuten, worin $R^4$ und $R^5$ die in Anspruch 1 angegebene Bedeutung haben.

3. Verfahren nach Anspruch 1 oder 2, dadurch gekennzeichnet, dass $R^2$ Benzyl oder insbesondere Methyl ist.

4. Verfahren nach Anspruch 1, dadurch gekennzeichnet, dass $R^1$ 3-Octadecyloxy-2-methoxy-propyl, $R^2$ Methyl, X die NH-Gruppe und Y Sauerstoff bedeutet.

5. Verfahren zur Herstellung eines Arzneimittels, dadurch gekennzeichnet, dass man eine oder mehrere Verbindungen der Formel I, hergestellt nach einem Verfahren der Ansprüche 1 bis 4, in an sich bekannter Weise mit Trägerstoffen vermischt.

**Claims**

for the contracting states BE, CH, DE, FR, GB, LI, LU, NL, SE

1. Derivatives of N,N-bis-(2-chloroethyl)-phosphoric acid amide of the general formula I

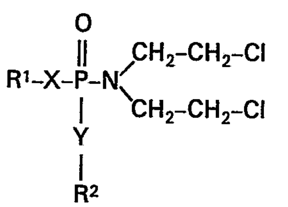

(I)

wherein X and Y are the same or different and signify O or $NR^3$, $R^1$ and $R^2$ are the same or different and $R^1$ signifies the radical $CH_2(OR^4)$-$CH_2$-$CH_2$-, $CH_2(OR^4)$-$CH(CH_3)$-$CH_2$- or $CH_2(OR^4)$-$CH(OR^5)$-$CH_2$- and, when X is an $NR^3$ group, can also be hydrogen, $R^2$ possesses one of the meanings of $R^1$ or is ethyl, propyl, allyl, propenyl, chloroethyl, benzyl or methyl, $R^3$ is hydrogen, methyl, ethyl, propyl or allyl, with the proviso that if not only X but also Y is equal to $NR^3$, $R^1$, $R^2$ and $R^3$ cannot all simultaneously be hydrogen, and wherein the radicals $R^4$ and $R^5$ are the same or different and represent an alkyl radical R or an acyl radical -COR, whereby R signifies a straight-chained or branched, saturated or unsaturated alkyl group with 1 to 25 carbon atoms, or an aralkyl radical with 1 to 25 carbon atoms in the alkyl chain and one of the radicals can also be a hydrogen atom.

2. Compounds according to claim 1, characterised in that $R^1$ and/or $R^2$ signifies the radical $CH_2(OR^4)$-$CH(OR^5)$-$CH_2$-, wherein $R^4$ and $R^5$ possess the meaning given in claim 1.

3. Compounds according to claim 1 or 2, characterised in that $R^2$ is benzyl or especially methyl.

4. Compounds according to claim 1, characterised in that $R^1$ is 3-octadecyloxy-2-methoxypropyl, $R^2$ methyl, X the NH group and Y oxygen.

5. Process for the preparation of the compounds of formula I according to one of claims 1 to 4, characterised in that one

1) reacts N,N-bis- (2-chloroethyl)-amidophosphoric acid dichloride

a) with a compound $R^1$-XH and the reaction product obtained thereafter with a compound of the formula $R^2$-YH, or

b) with a compound of the formula $R^2$-YH and reacts the reaction product obtained with a compound of the formula $R^1$-XH, whereby $R^1$, $R^2$, X and Y possess the meaning given in claims 1 to 4, or

2) reacts phosphorus oxychloride with $R^1$-XH, reacts the $R^1X$-$POCl_2$ obtained with bis-(2-chloroethyl)-amine and then the compound obtained with $R^2$-YH, whereby $R^1$, $R^2$, X and Y possess the meaning given in claims 1 to 4.

6. Medicaments containing one or more compounds of the formula I according to one of claims 1 to 4.

**Claims**

for the contracting state AT

1. Process for the preparation of derivatives of N,N-bis-(2-chloroethyl)-phosphoric acid amide of the general formula I

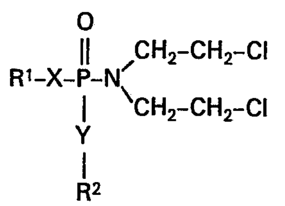

(I)

wherein X and Y are the same or different and signify O or $NR^3$, $R^1$ and $R^2$ are the same or different and $R^1$ signifies the radical $CH_2(OR^4)$-$CH_2$-$CH_2$-, $CH_2(OR^4)$-$CH(CH_3)$-$CH_2$- or $CH_2(OR^4)$-$CH(OR^5)$-$CH_2$- and, when X is an $NR^3$ group, can also be hydrogen, $R^2$ possesses one of the meanings of $R^1$ or is ethyl, propyl, allyl, proprenyl, chloroethyl, benzyl or methyl, $R^3$ is hydrogen, methyl, ethyl propyl or allyl, with the proviso that if not only X but also Y is equal to $NR^3$, $R^1$, $R^2$ and $R^3$ cannot all simultaneously be hydrogen, and wherein the radicals $R^4$ and $R^5$ are the same or different and represent an alkyl radical R or an acyl radical -COR, whereby R signifies a straight-chained or branched, saturated or unsaturated alkyl group with 1 to 25 carbon atoms, or an aralkyl radical with 1 to 25 carbon atoms in the alkyl chain and one of the radicals can also be a hydrogen atom, in that one

1) reacts N,N-bis-(2-chloroethyl)-amidophosphoric acid dichloride

a) with a compound $R^1$-XH and the reaction product obtained thereafter with a compound of the formula $R^2$–YH, or

b) with a compound of the formula $R^2$–YH and reacts the reaction product obtained with a compound of the formula $R^1$-XH, whereby $R^1$, $R^2$, X and Y possess the meaning given in claims 1 to 4, or

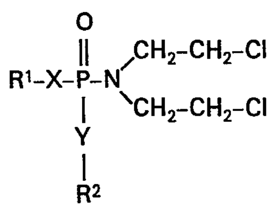

(I)

2) reacts phosphorus oxychloride with $R^1$-XH, reacts the $R^1X$-$POCl_2$ obtained with bis-(2-chloroethyl)-amine and then the compound obtained with $R^2$–YH, whereby $R^1$, $R^2$, X and Y possess the meaning given in claims 1 to 4.

2. Process according to claim 1, characterised in that $R^1$ and/or $R^2$ signify the radical $CH_2(OR^4)$-$CH(OR^5)$-$CH_2$, wherein $R^4$ and $R^5$ have the meaning given in claim 1.

3. Process according to claim 1 or 2, characterised in that $R^2$ is benzyl or especially methyl.

4. Process according to claim 1, characterised in that $R^1$ signifies 3-octadecyloxy-2-methoxypropyl, $R^2$ methyl, X the NH group and Y oxygen.

5. Process for the production of a medicament, characterised in that one mixes one or more compounds of formula I, prepared according to a process of claims 1 to 4, in per se known manner with carrier materials.

**Revendications**

pour les Etats contractants BE, CH, DE, FR, GB, LI, LU, NL, SE

1. Dérivés du N,N-bis-(2-chloréthyl)-phosphamide répondant à la formule générale I

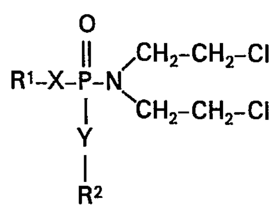

(I)

dans laquelle X et Y sont identiques ou différents et désignent O et $NR^3$, $R^1$ et $R^2$ sont identiques ou différents et $R^1$ désigne le radical $CH_2(OR^4)$-$CH_2$-$CH_2$, $CH_2$-$(OR^4)$-$CH(CH_3)$-$CH_2$ ou $CH_2(OR^4)$-CH $(OR^5)$-$CH_2$-, et lorsque X est un groupe $NR^3$, il peut également être l'hydrogène, $R^2$ possède une des significations de $R^1$ ou est un radical éthyle, propyle, allyle, propényle, chloréthyle, benzyle ou méthyle, $R^3$ est l'hydrogène, un groupe méthyle, éthyle, propyle ou allyle, sous réserve que dans le cas où tant X que Y sont $NR^3$, $R^1$, $R^2$ et $R^3$ ne peuvent pas être tous simultanément l'hydrogène, et dans laquelle les radicaux $R^4$ et $R^5$ sont identiques ou différents et représentent un radical alkyle R ou un radical acyle -COR, R désignant un groupe alkyle linéaire ou ramifié, saturé ou insaturé, en $C_1$ à $C_{25}$, ou un radical aralkyle ayant 1 à 25 atomes de carbone dans la chaîne alkyle, et un des radicaux pouvant aussi être l'hydrogène.

2. Composés suivant la revendication 1, caractérisés en ce que $R^1$ et/ou $R^2$ désignent le radical $CH_2$-$(OR^4)$-$CH(OR^5)$-$CH_2$-, dans lequel $R^4$ et $R^5$ possèdent la signification indiquée dans la revendication 1.

3. Composés suivant les revendications 1 ou 2, caractérisés en ce que $R^2$ est un radical benzyle ou en particulier méthyle.

4. Composés suivant la revendication 1, caractérisés en ce que $R^1$ est le radical 3-octadécyloxy-2-méthoxy-propyle, $R^2$ est le radical méthyle, X est le groupe NH et Y l'oxygène.

5. Procédé de préparation des composés répondant à la formule I suivant l'une des revendications 1 à 4, caractérisé en ce que

1) on fait réagir le dichlorure que l'acide N,N-bis-(2-chloréthyl)-amidophosphorique

a) avec un composé $R^1$-XH, et on fait réagir ensuite le produit de réaction obtenu avec un composé répondant à la formule $R^2$–YH, ou

b) avec un composé répondant à la formule $R^2$–YH et on fait réagir le produit de réaction obtenu avec un composé répondant à la formule $R^1$-XH, $R^1$, $R^2$, X et Y possédant les significations indiquées dans les revendications 1 à 4, ou

2) on fait réagir l'oxychlorure de phosphore avec $R^1$–XH, on fait réagir le $R^1X$-$POCl_2$ obtenu avec la bis-(2-chloréthyl)-amine, puis on fait réagir le composé obtenu avec $R^2$–YH, $R^1$, $R^2$, X et Y ayant les significations indiquées dans les revendications 1 à 4.

6. Médicament contenant un ou plusieurs des composés répondant à la formule I suivant l'une des revendications 1 à 4.

**Revendications**

pour l'Etat contractant AT

1. Procédé de préparation de dérivés du N,N-bis-(2-chloréthyl)-phosphamide répondant à la formule générale I

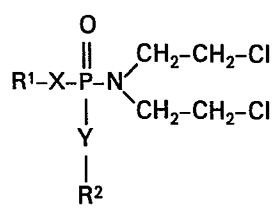

(I)

dans laquelle X et Y sont identiques ou différents et désignent O ou $NR^3$, $R^1$ et $R^2$ sont identiques ou différents et $R^1$ désigne le radical $CH_2(OR^4)$-$CH_2$-$CH_2$, $CH_2$-$(OR^4)$-$CH(CH_3)$-$CH_2$ ou $CH_2(OR^4)$-CH $(OR^5)$-$CH_2$- et, lorsque X est un groupe $NR^3$, il

peut également être l'hydrogène, $R^2$ possède une des significations de $R^1$ ou est un radical éthyle, propyle, allyle, propényle, chloréthyle, benzyle ou méthyle, $R^3$ est l'hydrogène, un radical méthyle, éthyle, propyle ou allyle, sous réserve que dans le cas où tant X que Y sont $NR^3$, $R^1$, $R^2$ et $R^3$ ne peuvent pas être simultanément l'hydrogène, et dans laquelle les radicaux $R^4$ et $R^5$ sont identiques ou différents et représentent un radical alkyle R ou un radical acyle -COR, R désignant un groupe alkyle linéaire ou ramifié, saturé ou insaturé, en $C_1$ à $C_{25}$, ou un radical aralkyle ayant 1 à 25 atomes de carbone dans la chaîne alkyle, et un des radicaux pouvant aussi être l'hydrogène,

1) en faisant réagir le dichlorure de l'acide N,N-bis-(2-chloréthyl)-amidophosphorique

a) avec un composé $R^1$-XH, puis en faisant réagir le produit de réaction obtenu avec un composé répondant à la formule $R^2$–YH, ou

b) avec un composé répondant à la formule $R^2$–YH et en faisant réagir le produit de réaction obtenu avec un composé répondant à la formule $R^1$-XH, $R^1$, $R^2$, X et Y ayant les significations indiquées ci-dessus, ou

2) en faisant réagir l'oxychlorure de phosphore avec $R^1$-XH, en faisant réagir le $R^1X-POCl_2$ obtenu avec la bis-(2-chloréthyl)-amine, et en faisant réagir ensuite le composé obtenu avec $R^2$–YH, $R^1$, $R^2$, X et Y ayant les significations indiquées ci-dessus.

2. Procédé suivant la revendication 1, caractérisé en ce que $R^1$ et/ou $R^2$ désignent le radical $CH_2-(OR^4)-CH(OR^5)-CH_2-$, où $R^4$ et $R^5$ possèdent ont la signification indiquée dans la revendication 1.

3. Procédé suivant les revendications 1 ou 2, caractérisé en ce que $R^2$ est un groupe benzyle ou en particulier méthyle.

4. Procédé suivant la revendication 1, caractérisé en ce que $R^1$ désigne le groupe -octadécyloxy-2-méthoxy-propyle, $R^2$ le groupe méthyle, X le groupe NH et Y l'oxygène.

5. Procédé de préparation d'un médicament, caractérisé en ce qu'on mélange un ou plusieurs composés répondant à la formule I, préparés selon un procédé des revendications 1 à 4, d'une manière connue en soi, avec des substances de support.